(19) **Europäisches Patentamt**
**European Patent Office**
**Office européen des brevets**

(11) **EP 3 343 826 B1**

(12) **EUROPEAN PATENT SPECIFICATION**

(45) Date of publication and mention
of the grant of the patent:
**23.02.2022 Bulletin 2022/08**

(21) Application number: **16207079.1**

(22) Date of filing: **28.12.2016**

(51) International Patent Classification (IPC):
**H04L 5/22** *(2006.01)*          **H04B 3/32** *(2006.01)*

(52) Cooperative Patent Classification (CPC):
**H04B 3/32; H04L 5/1469; H04L 5/22;**
**H04M 11/062;** H04M 11/06

(54) **DISCONTINUOUS OPERATION AND DYNAMIC TIME DIVISION DUPLEXING FOR A MULTI-LINE COMMUNICATION SYSTEM**

DISKONTINUIERLICHER BETRIEB UND DYNAMISCHES ZEITDUPLEX FÜR EIN MULTI-LINE-KOMMUNIKATIONSSYSTEM

FONCTIONNEMENT DISCONTINU ET DIVISION DE TEMPS DYNAMIQUE POUR UN SYSTÈME DE COMMUNICATION MULTI-LIGNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.07.2018 Bulletin 2018/27**

(73) Proprietor: **Intel Corporation**
**Santa Clara, CA 95054 (US)**

(72) Inventors:
• **STROBEL, Rainer**
**80331 Munich (DE)**
• **OKSMAN, Vladimir**
**Morganville, NJ 07751 (US)**

(74) Representative: **2SPL Patentanwälte PartG mbB**
**Landaubogen 3**
**81373 München (DE)**

(56) References cited:
**WO-A1-2014/018072      US-A1- 2013 272 177**

**Description**

TECHNICAL FIELD

Various examples of the invention generally relate to determining a partition of at least one time division duplex transmission frame of a data communication based on data rates established based on monitoring the data communication. Various examples of the invention specifically relate to the partition comprising an upstream section and a downstream section and enabling discontinuous operation of the data communication.

BACKGROUND

In communication systems using time division duplex (TDD), the upstream (US) and downstream (DS) transmission on all lines of a cable binder is assigned by division of the overall transmission time into non-overlapping US and DS sections of a TDD transmission frame. If the TDD transmission frames of the communication on the lines of the cable binder is time-aligned/synchronized, this may help to reduce near-end crosstalk (NEXT) between the lines of the cable binder. This can be desirable, because NEXT otherwise may substantially limit capacity. For example, such techniques are sometimes referred to as synchronized TDD which aligns TDD partitioning in multiple lines. For example, all lines of a cable binder implement US sections at the same time and then DS sections at the same time - while the overlap between a DS section in one line and an US section in another line is avoided. Thereby, NEXT is mitigated or even eliminated. Far-end crosstalk may be persistent even in view of TDD. FEXT can be reduced by FEXT cancellation methods such as vectoring.

Discontinuous Operation (DO) is used to reduce the overall energy consumption; with DO, the number of transmitted symbols within a TDD transmission frame is reduced according to the actual traffic requirements of individual lines. According to reference implementations of DO, this is done independently for the US direction and for the DS direction. If crosstalk is sufficiently strong, a distribution point unit (DPU) modem serving multiple subscribers over multiple lines is required to coordinate crosstalk cancellation - e.g., employing vectoring - and DO.

However, such techniques face certain restrictions and drawbacks. For example, use of TDD with a fixed ratio of the durations of the US section and the DS section may limit the flexibility of service assignment to customers that require high US throughput or high DS throughput.

To mitigate this, recently, International Telecommunication Union (ITU) Telecommunication Standardization Sector (ITU-T) defined a method that allows seamlessly changing the transmission time ratio of US and DS in a line under control of the upper layer management. This is done with the aim to address the actual traffic requirements. This method is called dynamic time allocation (DTA). See Draft Amendment 3 to Recommendation ITU-T G.9701 (2014) "Fast Access to Subscriber Terminals (FAST) - Physical layer specification: Amendment 3".

However, DTA may not or only to a limited degree be applied to multi-line communication system employing multiple lines in a cable binder, i.e., lines which experience inter-line crosstalk. For example, reference implementations of DTA are defined for single-line DPUs or for multi-line DPUs with no considerable crosstalk and no crosstalk cancellation in which each line is handled independently. In case multiple line DPUs with crosstalk cancellation are considered, the DTA according to reference implementations requires synchronous switching of the US/DS sections in all lines which is usually impractical because different lines may have different services used, e.g., when one line requires a high US data rate, another line may require a high DS data rate.

WO2014018072A1 discloses: Time division duplex transmission over copper physical channels is managed. In one example, upstream time slots for upstream transmission in a first physical channel are scheduled. Downstream time slots for downstream transmission in a second physical channel are scheduled. Transmission in the upstream time slots is substantially not simultaneous with transmission in the downstream time slots.

US20130272177A1 discloses an access node for digital subscriber line (DSL) communication comprising a transceiver configured to couple to a subscriber line, and a control entity coupled to the transceiver, wherein the control entity is configured to receive a request to switch to a nominal asymmetry ratio between an upstream data rate and a downstream data rate after initialization of the subscriber line, determine a flexible time period value based on the nominal asymmetry ratio, wherein the flexible time period is used to define a time division duplexing (TDD) frame structure, and forward a message that comprises the flexible time period value to the transceiver, wherein the transceiver is configured to transmit an upstream transmission using the TDD frame structure over the subscriber line, and receive a downstream transmission using the TDD frame structure over the subscriber line.

SUMMARY

Therefore, a need exists for advanced techniques of data communication on a plurality of lines of a cable binder. In particular, a need exists for such techniques which overcome or mitigate at least some of the above-identified restrictions and drawbacks. This need is met by the features of the independent claims. The dependent claims define embodiments.

BRIEF DESCRIPTION OF THE DRAWINGS

FIG. 1 schematically illustrates a communication system according to various examples.
FIG. 2 schematically illustrates a DPU modem according to various examples.
FIG. 3 schematically illustrates a customer premises equipment modem according to various examples.
FIG. 4 schematically illustrates TDD transmission frames employing DO according to various examples.
FIG. 5 is a flowchart of a method according to various examples.
FIG. 6 is a flowchart of a method according to various examples.
FIG. 7 schematically illustrates TDD transmission frames employing DO and dynamic US/DS allocation according to various examples.
FIG. 8 schematically illustrates TDD transmission frames employing DO and dynamic US/DS allocation according to various examples.
FIG. 9 schematically illustrates TDD transmission frames employing DO and dynamic US/DS allocation according to various examples.
FIG. 10 schematically illustrates a TDD transmission frame employing DO and dynamic US/DS allocation according to various examples.

DETAILED DESCRIPTION OF EMBODIMENTS

Exemplary embodiments of the invention will be described with reference to the drawings. While some embodiments will be described in the context of specific fields of application, e.g. in the context of certain spectral ranges and communication techniques, the embodiments are not limited to this field of application. The features of the various embodiments may be combined with each other unless specifically stated otherwise.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of implementing data communication on a plurality of lines of a cable binder are described. For example, the plurality of lines may provide transmission media implemented by copper cables such as twisted pair cables. The data communication may be according to various transmission protocols such as ITU-T G.9701 G.Fast, ITU-T G.993.1 VDSL, or ITU-T G.993.2 VDSL2.

For example, the plurality of lines may form a vectored group. Here, precoding parameters may be determined for each line of the plurality of lines based on the crosstalk from the remaining lines of the plurality of lines. By using vectoring, crosstalk between the plurality of lines can be reduced.

The data communication may employ a TDD transmission frame for duplexing and reducing NEXT crosstalk between the plurality of lines. The TDD transmission frame may correspond to an ordered group of symbol positions or symbol slots of defined length. The symbol positions may or may not be separated by time gaps. For example, decoding may be based on the TDD transmission frame. By means of the TDD transmission frame, US transmission and DS transmission may be separated in time domain for single line and for the plurality of lines. US transmission can occur during at least one US section of the TDD transmission frame for the plurality of lines; while DS transmission can occur during at least one DS section of the TDD transmission frame for the plurality of lines. The time arrangement of the various sections of the TDD transmission frame is sometimes referred to as the partition of the TDD transmission frame.

According to various examples, DO is facilitated. Here, individual lines of the plurality of lines have the freedom of implementing a quiet time during one or more symbol positions. During the quiet time, symbols are not transmitted, e.g., because no user data for transmission is available. Sometimes, the DO is defined in the framework of the Normal Operation Interval (NOI) in which the various lines of the plurality of lines are forced to transmit data symbols and the DO Interval (DOI) during which the various lines of the plurality of lines have the freedom to implement the quiet time, i.e., transmit both data symbols and quiet symbols. I.e., during DOI, a modem may choose to not transmit in one or more symbol slots of the TDD transmission frame. Each one of the US section and the DS section of the partition of the TDD transmission frame may include one or more NOIs and/or one or more DOIs.

According to examples, a partition of at least one TDD transmission frame of the data communication is determined. The partition includes an US section and a DS section and enables DO of the data communication, e.g., in corresponding directions of transmission.

According to examples, the partition may be dynamically determined, i.e., adjusted from time to time. For example, the partition may be re-determined on a time scale on the order of 1-20 ms. This may be referred to as dynamic US/DS allocation.

In some examples, the entire frame configuration of the TDD transmission frame is changed and signaled when implementing the new partition. In other examples, it is possible that only a fraction of the entire TDD transmission frame is adjusted, e.g., a shared part of the TDD transmission frame. Then, the overall frame configuration of the TDD transmission frame may remain fixed, but the shared part may be adjusted.

According to examples, techniques are provided which allow for combination of DO with dynamic US/DS allocation in an efficient way such that high US data rates and high DS data rates are available as required by particular service, while power is saved whenever there is no need for high US or DS data rates. By combining DO and dynamic US/DS allocation for multiple lines, both, flexible adjustment of the partition of the TDD transmission frame according to the currently experienced data rates, as well as reduced overall energy consumption can be achieved.

An example of the combination of DO and dynamic US/DS allocation is described in the following: If compared to ITU-T G.9701 DTA, according to the techniques described herein, it is not mandatory to re-configure the entire US section and/or DS section in a TDD transmission by a special command. By the techniques described herein, it is possible to not reconfigure the US section and DS section, but rather employ the DO to facilitate the needed US and DS capacity: when DO is applied to the downstream section, a situation may occur where a significant number downstream slots are quiet and upstream symbols could be sent. By using the same symbol position for both US and DS as a shared part and dynamically changing such a symbol position, the determination of a partition can be facilitated. In other words, it may be possible to dynamically modify the ratio between the US section and the DS section by DO setting.

For example, the combined dynamic US/DS allocation-DO-techniques may operate in a multi-line environment employing crosstalk cancellation. This may be facilitated by a joint optimization across the plurality of lines. For example, the partition of the TDD transmission frame in a particular direction may be subject to the optimization. Alternatively or additionally, the joint optimization may be across, both, downstream and upstream direction. For example, this may include the optimization of the US section, the DS section, the NOIs and the DOIs, i.e., generally of the appropriate transmission framing and the DO parameters across the plurality of lines.

According to examples, it is possible to combine DO and dynamic US/DS allocation in a vectored multi-line DPU such that unused time slots in one direction may be switched to the respective other direction in a dynamic manner.

It may be possible to maximize both the US and DS peak and average data rates using a flexible US/DS ratio - i.e., a ratio between the duration of the US section with respect to the DS section. Alternatively or additionally, for given US and DS data rates, power consumption may be minimized. For example, it would be possible that the joint optimization includes an objective function which is determined based on the overall energy consumption and further includes a constraint determined based on the data rates. In some examples, the constraint may equal the current data rates. In other examples, the constraint may be derived directly or indirectly from the current data rates. For this, an optimization may be employed allowing to minimize the number of active symbols slots - and, thereby, power consumption - across the vectored group in both transmission directions simultaneously thus creating an optimum split between required US and DS symbol position in every TDD transmission frame or in every group of consecutive TDD transmission frames. Generally, optimization of bit rates, of power consumption, or of both is possible.

Furthermore, a TDD transmission frame partition may be employed that allows flexible assignment of US/DS ratio per TDD transmission frame or per group of consecutive TDD transmission frames. For this, a static part and a dynamic part may be included where the partition is subject to dynamic US/DS allocation within the dynamic part, but not within the static part.

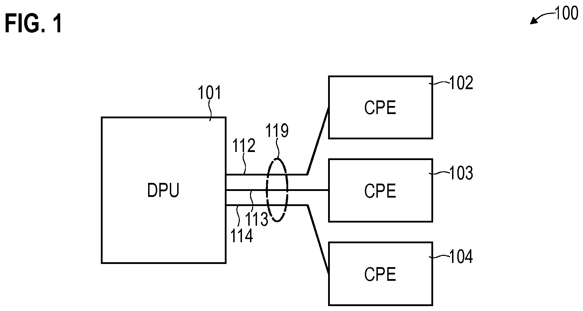

FIG. 1 illustrates aspects with respect to a communication system 100. The communication system 100 includes a DPU modem 101 and multiple Customer Premises Equipment (CPE) modems 102-104. The DPU modem 101 is connected via different lines 112-114 with the various CPE modems 102-104. The lines 112-114 are part of a cable binder 119 and hence experience significant crosstalk from each other.

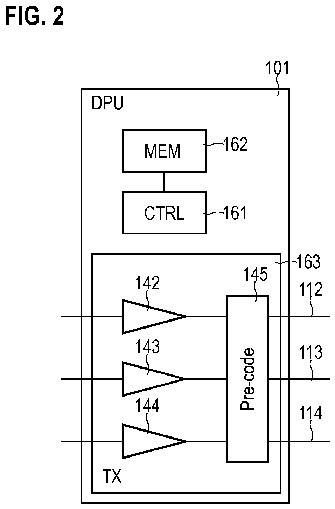

FIG. 2 illustrates aspects with respect to the DPU modem 101. The modem 101 includes control circuitry 161. For example, the control circuitry 161 may be implemented by a processor, a field programmable array, and/or an application-specific integrated circuit. The control circuitry 161 may be implemented by hardware and/or software. For example, the control circuitry 161 may access the memory 162, e.g., a non-volatile memory 162. The control circuitry 161 may load program code from the memory 161. The control circuitry 161 may then execute the program code. Execution of the program code may cause the control circuitry 161 to perform techniques regarding data communication employing DO and dynamic time adjustment as described herein.

Furthermore, the control circuitry 161 can be configured to control a transmitter 163. The transmitter 163 includes digital modulators 142-144 and a pre-coder 145. Precoding parameters may be applied by the precoder 145 to facilitate vectoring. A receiver is not shown in FIG. 2 for sake of simplicity. By appropriately controlling the transmitter 163 and/or the receiver, different partitions of a TDD transmission frame employed for the data communication can be implemented.

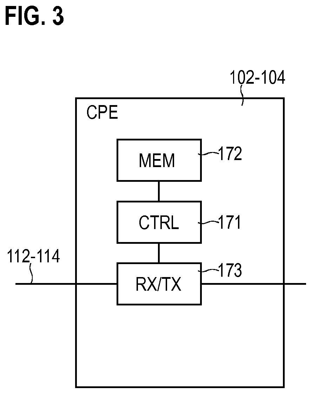

FIG. 3 illustrates aspects with respect to the CPE modems 102-104. The modems 102-104 include control circuitry 171. For example, the control circuitry 171 may be implemented by a processor, a field programmable array, and/or an application-specific integrated circuit. The control circuitry 171 may be implemented by hardware and/or software. For example, the control circuitry 171 may access a memory 172, e.g., a non-volatile memory 172. The control circuitry 171 may load program code from the memory 171. The control circuitry 171 may then execute the program code. Execution of the program code may cause a control circuitry 171 to perform techniques regarding data communication employing DO and dynamic time adjustment as described herein.

The CPE modems 102-104 are coupled with the respective lines 112-114. The respective transmitter and receiver 173 are illustrated. By appropriately controlling the transmitter and/or the receiver 173, different partitions of a TDD transmission frame employed for the data communication can be implemented.

In the various examples described herein, control functionality for determining the partition of TDD transmission frames may reside in the DPU modem 101. Alternatively or additionally, at least some of the control functionality may reside in the CPE modems 102-104. For example, the control circuitry 161 of the DPU modem 101 may determine an appropriate partition and may inform the CPE modems 102-104 by means of control signaling. It would be possible that the control circuitry 161 of the DPU modem 101 determines the partition based on transmission characteristics - such as the data rates - reported by the CPE modems 102-104.

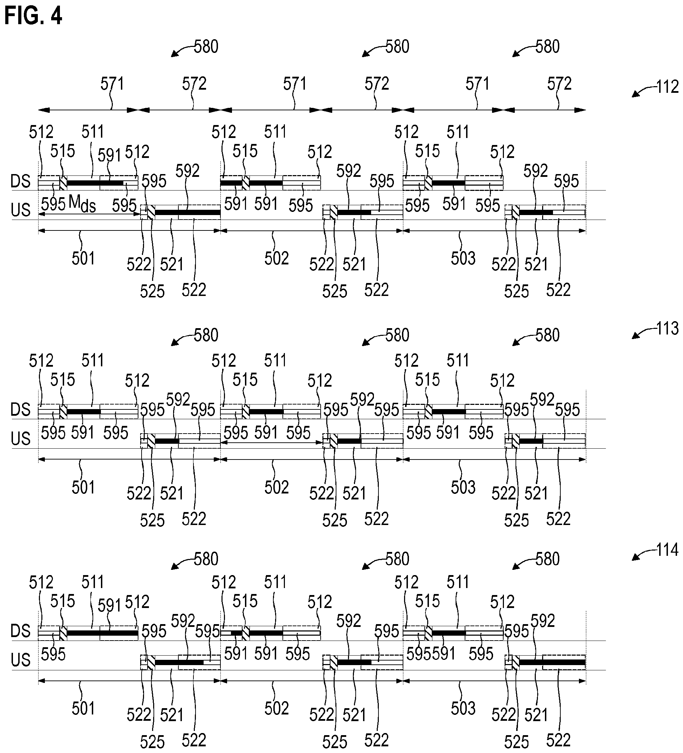

FIG. 4 illustrates aspects with respect to a partition 580 of multiple TDD transmission frames 501-503. FIG. 4 also illustrates aspects with respect to DO.

FIG. 4 illustrates a sequence of three TDD transmission frames 501-503. In particular, FIG. 4 illustrates an example partition 580 between a DS section 571 and an US section 572. In the example of FIG. 4, the TDD transmission frames 501-503 all have the same partition 580: As illustrated in FIG. 4, the ratio between the duration of the DS section 571 and the duration of the US section 572 remains fixed over the course of the three TDD transmission frames 501-503. Dynamic US/DS allocation is not employed in FIG. 4.

According to the framing structure of the TDD transmission frames 501-503, the size of the DS section 571 is Mds symbols (for sake of simplicity, in FIG. 4, Mds is only illustrated once in TDD transmission frame 501 on line 112), and the size of US section 572 is ($M_F$-Mds -1=Mus-1), where $M_F$ is the number of symbol positions in a TDD transmission frame for both US and DS directions, and "1" is a gap between US and DS sections 571, 572 of the TDD transmission frame 501-503 (not illustrated in FIG. 4).

Generally, in the various examples described herein, the value of Mds may be the same for a given TDD transmission frame 501-503 for all lines in the vectored group in the aim to mitigate NEXT.

In the example of FIG. 4, Mds also remains fixed for all TDD transmission frames 501-503, because dynamic US/DS allocation is not enabled. If dynamic US/DS allocation is enabled, the value of Mds would change upon dynamic US/DS allocation update. If dynamic US/DS allocation is applied in a vectored group, the same dynamic US/DS allocation update may generally occur simultaneously in all lines 112-114 of a vectored group to avoid NEXT. I.e., because the data communication on the lines 112-114 switches coherently between the DS section 571 and the US section 572, NEXT can be mitigated.

In FIG. 4, the TDD transmission frames 501-503 support DO: thus, the DS sections 571 are partitioned into NOIs 511 where all lines are active and DOIs 512 where lines 112-114 may discontinue - i.e., employ a quiet time -, depending on their data rates. Likewise, the US sections 572 are partitioned into NOIs 521 and DOIs 522.

During the NOIs 511, 521, DS data 591 or US data 592 (filled black area in FIG. 4) is transmitted on all lines 112-114. Depending on the traffic, data 591, 592 may or may not be transmitted on the various lines 112-114 during the DOIs 512, 522. If no data 591, 592 is transmitted, a respective quiet time 595 is implemented. Here, the power spectral density of transmission may be zero. It may also be possible to transmit idle symbols: here, pre-compensation signals may be transmitted. The idle symbols may not encode usable data. Idle symbols are generally known from ITU-T G.9701.

For example, in FIG. 4 a scenario is illustrated where comparably limited traffic is occurring on the line 113 such that data 591 is not transmitted at all during the DOIs 512, 522 on the line 113 and only quiet times 595 are present; differently, more traffic occurs on the lines 112, 114 such that data 591 is at least partially transmitted during the DOIs 512, 522 on the lines 112, 114. Transmission of data during the DOIs 512, 522 may be implemented on symbol level: certain symbol slots may or may not be used.

In FIG. 4, a DS control channel 515 and an US control channel 525 are illustrated (dashed filling). Control signaling can be implemented on the control channels 515, 525. For example, the control signaling may be used to implement a certain partition 580. For example, the control signaling may be used to signal certain link configurations such as precoding parameters, etc. For example, according to ITU-T G.fast, the function of control channels 515, 525 may implement the robust management channel (RMC).

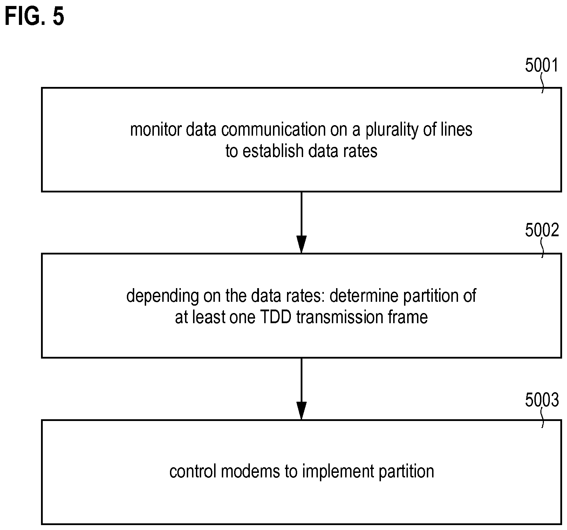

FIG. 5 is a flowchart of a method according to various examples. In block 5001, the data communication on the plurality of lines 112-114 of the cable binder is monitored. The plurality of lines 112-114 experience significant inter-line crosstalk.

By such monitoring, the data rates for the data communication can be established. For example, the current data rate may be determined. For example, a prospectively estimated data rate may be predicted. In other examples, it would be possible to derive other operational characteristics of the plurality of lines 112-114 and subsequently use them in block 5002. Then, in block 5002, it is possible to determine the partition 580 of the TDD transmission frames 501-503 depending on the data rates - and/or further operational characteristics of the data communication - established in block 5001. This corresponds to dynamic US/DS allocation, because the partition 580 is adjusted according to the ongoing traffic - if compared to a static set-end-forget technique. Such adjustment of the partition 580 includes a change of the overall frame configuration - e.g., by means of the parameter Mds or Mus (cf. FIG. 4). In other examples, the overall frame configuration may be persevered, but a shared part of the TDD transmission frame 501-503 may be dynamically allocated to the US section or the DS section. For example, an additional parameter beyond Mds or Mus may be assigned for this purpose.

Different objectives can be pursued in block 5002. For example, the overall energy consumption is considered. This may be done by appropriately setting DO.

In block 5003, the various modems 101-104 are controlled to implement the partition as determined in block 5002.

In a simple example, block 5003 may include local reconfiguration of the timing of the TDD transmission frames 501-503, e.g., if the control logic resides within one and the same DPU modem 101. In further examples, this may also include control signaling on a control channel.

Generally, it may be beneficial if the determination of the partition 580 in block 5002 can be executed comparably fast. Likewise, it may be beneficial if the implementation of the partition in block 5003 can be executed quickly. A typical time scale for blocks 5002 and 5003 may be on the order of the duration of 1-10 TDD transmission frames of the transmission protocol of the respective data communication, optionally 1-5 TDD transmission frames, further optionally 2-3 TDD transmission frames. In some examples, it may be possible that the determination of the partition 580 in block 5002 is performed in a time duration which is shorter than the duration of a TDD transmission frame 501-503 of the transmission protocol. This may facilitate adjustment of the partition 580 for each transmission frame 501-503. For example, to further facilitate such fast determination of the partition 580 in block 5002, it may be possible to consider changes in the data communication over the course of time. Then, it may be possible to avoid a full-scale a priori determination of the partition 580 for each TDD transmission frame 501-503; rather, the determination of the partition 580 of a given TDD transmission frame 501-503 may be based on the partition 580 of at least one further TDD transmission frame 501-503 that has been determined earlier. Such an incremental adjustment may be executed faster. Thereby, changes to the data communication can be accurately and quickly tracked.

Alternatively or additionally, it can also be possible to determine the partition 580 for a plurality of TDD transmission frames 501-503 forming a group. Here, the size of the group may assigned based on actual capabilities to exchange traffic metrics in block 5003 and perform optimization computations in block 5002. Then, traffic metrics averaged per TDD transmission frame group and determination of the partition 580 per TDD transmission frame group may be performed. An example of a TDD transmission frame group is a group of 8 consequent TDD transmission frames, i.e., a superframe. Other group sizes are also possible.

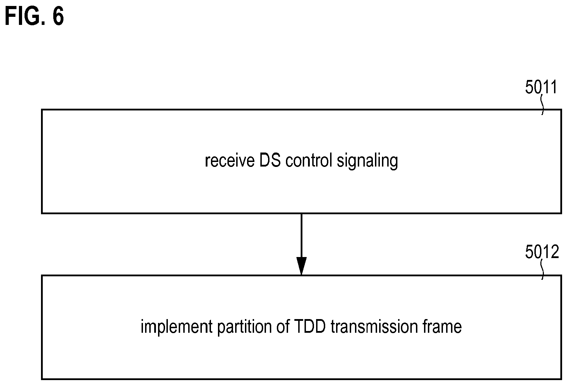

FIG. 6 is a flowchart of a method according to various examples. In block 5011, control signaling is received on a control channel. For example, DS control signaling can be received on a DS control channel by one of the CPE modems 102-104.

The control signaling may be indicative of a partition 580 of one or more TDD transmission frames 501-503. For example, the control signaling may be indicative of Mus and/or Mds. Alternatively, the control signaling may not be indicative of the overall frame configuration of the TDD transmission frame 501-503, but rather indicate distribution of a shared part between US and DS.

It is then possible to implement the partition 580 by appropriately reconfiguring the timing of the TDD transmission frames 501-503.

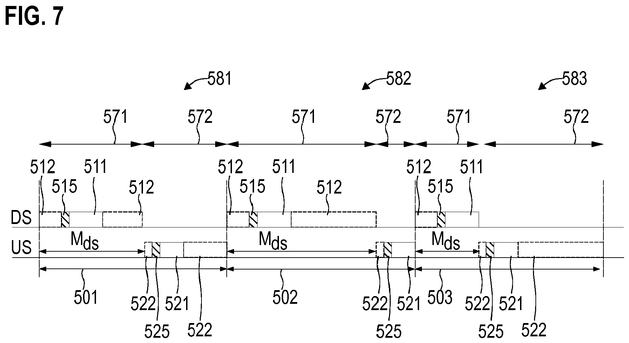

FIG. 7 illustrates aspects with respect to a partition 580 of multiple transmission frames 501-503. FIG. 7 also illustrates aspects with respect to DO (data 592 and quiet time 595 is not shown in FIG. 7 for sake of simplicity). FIG. 7 also illustrates aspects with respect to dynamic US/DS allocation. For example, the methods according to FIGs. 5 and 6 could be employed to implement the partition 580 according to FIG. 7.

In case of dynamic US/DS allocation, modification of the DS section 571 and, accordingly, of the US section 572 of the TDD transmission frames 501-503 is possible, e.g., by changing the value of Mds and by leaving the duration of the TDD transmission 501-503 frame constant. In the example of FIG. 7, the duration of the DS sections 571 and of the US sections 572 is adjusted according to dynamic US/DS allocation from one TDD transmission frame to the next TDD transmission frame 501-503. I.e., different partitions 581-583 are employed.

With DO, a quiet time 595 (not shown in FIG. 7 for simplicity) is implemented during DOIs 512, 522 when there is no data 591 to send. DO may be used for power saving and for crosstalk reduction purposes. DO may also increase the overall data throughput, because the time periods when DO is applied in one direction can be used by for transmission in the other direction. For instance, when DO is applied in the DS, the released transmission time may be used in the US for transmission. This is illustrated in FIG. 7 by the rearrangement of Mds between the various partitions 581-583.

Hence, to re-use the released transmission time according to DO, the partition 581-583 of the TDD transmission frame 501-503 can be adjusted. This may include the time shift between the logical frame and the TDD transmission frame, the DRMC.

Dynamically determining the partition 581-583 can facilitate dynamic changes in US/DS transmission ratio, serving efficiently it the case of multi-line communication systems 100. By such techniques, the partition 581-583 may be updated every TDD transmission frame 501-503 and, hence, the associated changes in US/DS ratio can be controlled/updated dynamically by utilizing the US/DS sections 571, 572 for transmission in the opposite direction, on logical frame time bases. This allows for timely tracking changes in the operational characteristics of the data communication by dynamic US/DS allocation.

The partition 581-583 - and, thereby, the US/DS sections 571, 572 - may be implemented using control signaling indicative of conventional DO parameters such as TTR, TA, TBUDGET according to G.9701.

Hence, the DO and the dynamic US/DS allocation are adjusted coherently: Different partitions 581-583 may implement different DOIs 512, 522. This facilitates application of DO and dynamic US/DS allocation to multi-line vectored lines. Namely, when DO is applied in a particular direction and FEXT is relatively high, the transmitter and receiver settings, such as bit loading, gains, pre-coder and post-canceller, typically require changes whenever the group of active lines changes, i.e., whenever the number of quiet times 595 changes, etc.. All these settings for a specific group of active and inactive lines form a so-called line configuration which is identified by a configuration index $t_{ds}$ in DS and $t_{us}$ in US. The settings may be pre-computed - e.g., in a training phase prior to Showtime where data is communicated -, exchanged between the modems 101-104, and then locally stored. Hence, it is possible to retrieve, for each line of the plurality of lines 112-114, predetermined coding settings for the data communication based on the determined partition 580. This facilitates the DPU modem 101 switching quickly between different partitions 580, as only the configuration index and not all the individual line configurations are exchanged between transmitter and receiver.

In case crosstalk is low, one set of line configuration is sufficient. However, with higher crosstalk, there are multiple line configurations $1 \le t_{ds} \le T_{ds}$ and $1 \le t_{us} \le T_{us}$. Each line $l = 1,...,L$ may achieve a different data rate in different line configurations. The G.fast transmission protocol is conventionally limited to two configurations, i.e., one for NOI and one for DOI, in a TDD transmission frame.

Based on the line configurations it is possible to derive a matrix $R_{ds}$ denoting the data rates in DS and a matrix $R_{us}$ denoting the data rates in US for lines with indices from 1 to L according to:

$$\boldsymbol{R} = \begin{bmatrix} R_{\mathrm{NOI},1} & R_{\mathrm{DOI},1} & \dots & R_{\mathrm{DOI},1} & 0 \\ R_{\mathrm{NOI},2} & R_{\mathrm{DOI},2} & \dots & 0 & 0 \\ \vdots & & & & \vdots \\ R_{\mathrm{NOI},L} & 0 & \dots & 0 & 0 \end{bmatrix} \qquad (1)$$

This matrix illustrates an example in which a first line (line 1) uses the longest transmit time and a last line (line L) uses the shortest transmit time, i.e. is discontinued first.

An alternative scheme uses crosstalk avoidance in the DOI, which means that the channel is given individually to one line at a time in the TDD transmission frame such that the data rate matrix for the same lines from 1 to L is:

$$\boldsymbol{R} = \begin{bmatrix} R_{\mathrm{NOI},1} & R_{\mathrm{DOI},1} & 0 & \dots & 0 \\ R_{\mathrm{NOI},2} & 0 & R_{\mathrm{DOI},2} & \dots & 0 \\ \vdots & & & \ddots & \vdots \\ R_{\mathrm{NOI},L} & \dots & 0 & R_{\mathrm{DOI},L} & 0 \end{bmatrix} . \qquad (2)$$

The actual data rate depends on the time fraction $\tau_{(\mathrm{ds/us})}^{[t_{(\mathrm{ds/us})}]}$ of the TDD transmission frame 501-503 where each configuration is used. These time fractions are collected in a vector

$$\boldsymbol{\tau}_{(\mathrm{ds/us})} = \begin{bmatrix} \tau_{(\mathrm{ds/us})}^{[1]}, \dots, \tau_{(\mathrm{ds/us})}^{[T_{(\mathrm{ds/us})}]} \end{bmatrix} .$$

The average DS rates are then

$$r_{\mathrm{avg,ds}} = R_{\mathrm{ds}}\tau_{\mathrm{ds}} \tag{3}$$

and the average US rates are

$$r_{\mathrm{avg,us}} = R_{\mathrm{us}}\tau_{\mathrm{us}}. \tag{4}$$

Depending on the transceiver states (transmit, receive, quiet), the power consumption $\rho_l^{[t_{\mathrm{ds,us}}]}$ is different for each line $l$ in configuration $t_{\mathrm{ds}}$ or $t_{\mathrm{us}}$.

The average power consumption is given by:

$$\rho_{\mathrm{sum}} = \sum_{l=1}^{L} \frac{1}{T_{\mathrm{ds}} + T_{\mathrm{us}}} \left( \sum_{t_{\mathrm{ds}}=1}^{T_{\mathrm{ds}}} \rho_l^{[t_{\mathrm{ds}}]} + \sum_{t_{\mathrm{us}}=1}^{T_{\mathrm{us}}} \rho_l^{[t_{\mathrm{us}}]} \right). \tag{5}$$

For US direction as well as for DS direction, target data rate vectors $r_{\mathrm{min,ds}}$ and $r_{\mathrm{min,us}}$ are assigned. These target data rate vectors can be derived from or can be equal to the data rates obtained from monitoring the data communication (cf. FIG. 5: block 5001).

Minimizing power consumption can be formulated as a joint optimization across the plurality of lines 112-114:

$$\min_{t} c_{\mathrm{ds}}^{\mathrm{T}}\tau_{\mathrm{ds}} + c_{\mathrm{us}}^{\mathrm{T}}\tau_{\mathrm{us}}$$
$$\mathrm{s.t.}\ \tau_{\mathrm{ds}}^{[t]} \geq 0 \quad \forall t = 1,\ldots,T_{\mathrm{ds}}$$
$$\mathrm{s.t.}\ \tau_{\mathrm{us}}^{[t]} \geq 0 \quad \forall t = 1,\ldots,T_{\mathrm{us}}$$
$$\mathrm{s.t.}\ \sum_{t=1}^{T_{\mathrm{ds}}} \tau_{\mathrm{ds}}^{[t]} + \sum_{t=1}^{T_{\mathrm{us}}} \tau_{\mathrm{us}}^{[t]} = 1$$
$$R_{\mathrm{ds}}\tau_{\mathrm{ds}} \geq r_{\mathrm{min,ds}}$$
$$R_{\mathrm{us}}\tau_{\mathrm{us}} \geq r_{\mathrm{min,us}}. \tag{6}$$

The objective function vectors $c_{\mathrm{ds}} \in \mathbb{R}^{T_{\mathrm{ds}}}$ and $c_{\mathrm{us}} \in \mathbb{R}^{T_{\mathrm{us}}}$ are

$$c_{\mathrm{ds}}^{[t]} = \sum_{l=1}^{L} \rho_l^{[t_{\mathrm{ds}}]} \tag{7}$$

and

$$c_{\mathrm{us}}^{[t]} = \sum_{l=1}^{L} \rho_l^{[t_{\mathrm{us}}]}. \tag{8}$$

Eqs. 6-8 thus define a joint optimization across the plurality of lines to determine the partition 580 where the joint optimization includes an objective function determined based on the overall energy consumption and further includes constraints determined based on the data rates for US and DS, respectively. The optimization of Eq. 6 allows to determine quiet times of DO within the US section 572 and/or the DS section 571, see Eqs. 1 and 2. This may happen, e.g., if the data rate of one or more lines is below a threshold.

As a result of joint optimization of power consumption for US and DS by using DO, for each line the minimum number of data symbols to be transmitted in each transmitted direction is determined in the aim to satisfy the target data rate constraints. Quiet times 595 are possible to reduce the overall energy consumption. Running the joint optimization over the entire vectored group of lines 112-114 returns the number of data symbol positions in US and DS, $m_{us}$, $m_{ds}$, respectively, that is necessary to meet the constraints in every line 112-114.

The optimization is also performed under a further constraint $m_{us} + m_{ds} < M_F$, where $M_F$ is the size of TDD transmission frames expressed in symbols, thus values $m_{us}$, $m_{ds}$ determine the actual time allocation or actual ratio of the duration of the DS section 571 with respect to the US section 572 for a particular TDD transmission frame or a particular set of TDD transmission frames. Thus, according to such techniques, US and DS traffic may each occupy a major part of the TDD transmission frame 501-503, e.g., $\tau_{ds,min} \leq \frac{r_{min,ds,l}}{R_{noi,ds,l}} \leq \tau_{ds,max}$ and $\tau_{us,min} \leq \frac{r_{min,us,l}}{R_{noi,us,l}} \leq \tau_{us,max}$ with $\tau_{ds,min}$, $\tau_{us,min} = 0.1$ and $\tau_{ds,max}$, $\tau_{us,max} = 0.9$ (while, according reference implementations, the target data rates are assigned within a range $r_{min,ds,l} \leq \frac{T_{ds}}{N_{sym}} R_{noi,ds,l}$ and $r_{min,us,l} \leq \frac{T_{us}}{N_{sym}} R_{noi,us,l}$ ).

This may lead to a situation where Eq. (6) is infeasible, i.e., the constrain $m_{us} + m_{ds} < M_F$ can't be satisfied. Then the optimization does not converge to a solution, i.e., cannot be solved. This may be because one lines 112-114 requests high US rates while another line 112-114 requests high DS rates. In such a scenario of non-solvableness/collision cases of the optimization, it may be possible to relax the constraints determined based on the data rates. For example, for collision cases, a certain target US/DS ratio may be predefined for optimization. Then, solvableness to this predefined US/DS ratio in case of a high load on the communication system 100 can be employed, but it is nonetheless possible to assign extra US or DS transmission times in cases where the resources are not fully utilized. In other words, there will be a tendency towards using every opportunity within the available transmission time to satisfy a demand for resources. This is because with the examples described herein, the partition 580 is largely flexible and may even change in every TDD transmission frame 501-503 depending on its particular load for US and DS.

In the optimization, the rate constraints may be relaxed by slack variables $s_{ds}$ and $s_{us}$. These slack variables are constrained to achieve the target US/DS ratio $\tau_{us,target}/\tau_{ds,target}$ where $\tau_{us,target} + \tau_{ds,target} = 1$.

The optimization problem to be solved to achieve this conditions is given by

$$\min_t c_{ds}^T \tau_{ds} + c_{us}^T \tau_{us} + c_{ds,slack}^T s_{ds} + c_{us,slack}^T s_{us} \tag{9a}$$

$$\text{s.t. } \tau_{ds}^{[t]} \geq 0 \quad \forall t = 1, \ldots, T_{ds}$$
$$\text{s.t. } \tau_{us}^{[t]} \geq 0 \quad \forall t = 1, \ldots, T_{us}$$
$$\text{s.t. } \sum_{t=1}^{T_{ds}} \tau_{ds}^{[t]} + \sum_{t=1}^{T_{us}} \tau_{us}^{[t]} = 1 \tag{9b}$$

$$R_{ds}\tau_{ds} + R_{ds}s_{ds} \geq r_{min,ds}$$
$$R_{us}\tau_{us} + R_{us}s_{us} \geq r_{min,us} \tag{9c}$$

$$\text{s.t. } s_{ds}^{[t]} \geq 0 \quad \forall t = 1, \ldots, T_{ds}$$
$$\text{s.t. } s_{us}^{[t]} \geq 0 \quad \forall t = 1, \ldots, T_{us} \tag{9d}$$

$$\text{s.t. } \sum_{t=1}^{T_{ds}} s_{ds}^{[t]} \leq \tau_{us,target} - (1 - \tau_{ds,max})$$

$$\text{s.t. } \sum_{t=1}^{T_{us}} s_{us}^{[t]} \leq \tau_{ds,target} - (1 - \tau_{us,max}) \tag{9e}.$$

The objective function vectors for the slack variables are given by

$$c_{\mathrm{ds,slack}}^{[t]} = w\left(L + 1 - \left|\mathbb{I}_{\mathrm{a}}^{[t_{\mathrm{ds}}]}\right|\right) \tag{10}$$

for DS and

$$c_{\mathrm{us,slack}}^{[t]} = w\left(L + 1 - \left|\mathbb{I}_{\mathrm{a}}^{[t_{\mathrm{us}}]}\right|\right), \tag{11}$$

for US, where $w > \max\left(\max\limits_{t=1}^{T_{\mathrm{ds}}} c_{\mathrm{ds}}^t, \max\limits_{t=1}^{T_{\mathrm{us}}} c_{\mathrm{us}}^t\right)$ is a weight of the data rates with respect to the power minimization. $\left|\mathbb{I}_{\mathrm{a}}^{[t]}\right|$ is the number of active lines during configuration $t_{(\mathrm{ds,us})}$.

The objective according to Eq. (9a) minimizes the overall power consumption as long as $s_{\mathrm{ds}} = 0$ and $s_{\mathrm{us}} = 0$ and otherwise minimizes the distance between the requested data rates and the actual data rates. Thereby, Eq. (9b) guarantees that the time variables $\tau_{\mathrm{ds}}$ and $\tau_{\mathrm{us}}$ are positive and sum up to one. Eq. (9c) represents the target data rates that may be relaxed by the slack variables $s_{\mathrm{ds}}$ and $s_{\mathrm{us}}$ in case of a collision. Eq. (9d) guarantees positive slack variables; and Eq. (9e) is a constraint which limits the slack variables such that the target US/DS ratio $\tau_{\mathrm{us,target}}/\tau_{\mathrm{ds,target}}$ is achieved.

Thus, the following objective function may be implemented: Minimize power consumption subject to target data rates; and in case that target data rates are not achievable, minimize the distance between target data rates and actual data rates $c_{\mathrm{ds,slack}}^{\mathrm{T}} s_{\mathrm{ds}} + c_{\mathrm{us,slack}}^{\mathrm{T}} s_{\mathrm{us}}$; and the distance between target data rates and actual data rates is reduced such that the target US/DS ratio is achieved.

The results of the optimization according to Eqs. (6) or (9a) to (9e) are the transmit time vectors $\tau_{\mathrm{ds}}$ and $\tau_{\mathrm{us}}$. To derive the G.fast TDD transmission frame format, i.e., the partition 580-583 for each line 112-114, the time vectors are quantized to $N_{\mathrm{ds/us}}^{[t]}$ according to the number of DMT symbols in a TDD transmission frame 501-503.

$$N_{\mathrm{ds/us}}^{[t]} = \left\lceil \tau_{\mathrm{ds/us}}^{[t]}(Mf - 1)\right\rceil. \tag{12}$$

The TDD transmission frame in G.fast is described by the number of transmitted symbols per line $T_{\mathrm{budget},l}$, the length of the NOI $TTR_l$ and the number of quiet symbols between NOI and DOI is $TA_l$.

The transmit time is derived from the optimization result according to

$$T_{\mathrm{budget\ ds/us},l} = \sum_{r_{\mathrm{ds/us},l}^{[t]} > 0} N_{\mathrm{ds/us}}^{[t]} \tag{13}$$

and the length of the NOI for DS and US is $N_{\mathrm{ds/us}}^{[1]}$.

In case of the DO setup according to Eq. (1), $TA_l = 0$ while in case of the DO crosstalk avoidance setup according to Eq. (2), $TA_l$ is selected according to the number of quiet times in advance to the transmit time of the corresponding line.

Since the optimization covers both US and DS sections 571, 572, sufficient metrics of US traffic patterns generally available at the CPE modems 102-104 may be communicated to the DPU modem 101 in a timely manner, so that the control circuitry 161 can use such metrics of both US and DS traffic patterns. Such management decisions regarding the determination of the partition 580 may not be independent for US and DS sections 571, 572 and may not be independent for different lines 112-114. In this regard, it may be possible to implement the joint optimization in view of certain rules. Such rules may specify one or more of the following: Priorities for different lines 112-114; Priority for DS or US if both can't be fully satisfied in some lines 112-114; Target US/DS ratio and minimum/maximum US/DS ratio; and Priority of power consumption minimization over maximization of data rates. In some examples, the following strategy may be implemented: Maximization of data rates has higher priority than power consumption minimization; In the collision case, i.e., request of high US and high DS rate at the same time, the US and DS target rates are gradually reduced until the collision is gone or the configured target US/DS ratio is achieved; and the target rate reduction is performed on such lines first, which occupy the most transmit time. Other examples may use different strategies, for instance alternating of priorities between US and DS in case requests for US and DS capacity can't be satisfied at the same time.

In the example of FIG. 7, the partition 581-583 is adjusted from TDD transmission frame 501-503 to TDD transmission frame 501-503. I.e., subsequent TDD transmission frames 501-503 may employ different partitions 581-583. In further examples, it would also be possible to reconfigure the partition 580-583 for a group of subsequent TDD transmission frames, e.g., for a count of 5-20 TDD transmission frames.

In any case, it can be desirable to implement a reconfigured partition 580-583 with low latency. According to examples, the latency can be as low as a single TDD transmission frame 501-503. For this, in the various examples described herein, it is possible that controlling the modems 101-104 to implement the partition 580-583 includes unidirectional DS control signaling on the DS control channel 515 - or US control signaling on the US control channel 525. By implementing the partition 580 using unidirectional control signaling, it may not be required to wait for an acknowledgment or employ another error protection scheme such as a downcount. In particular, it may not be required to exchange bidirectionally a number of commands exchanged between transmitter and receiver before a new partition 580-583 is executed; rather, the DPU may communicate unidirectionally and execute the computed partition 580-583 including an updated size of NOI and DOI, the number of quiet symbols during the DOI, and the total number of data symbols required in each direction.

For example, for implementing the partition 582 of the TDD transmission frame 502, control signaling in the DS control channel 515 of the DS section 571 of the same TDD transmission frame 502 may be employed. Alternatively or additionally, control signaling in the DS control channel 515 of the DS section 571 of the preceding TDD transmission frame 501 may be employed. Hence, generally, it can be possible to control the CPE modems 102-104 of the plurality of lines 112-114 to implement the partition 580-583 of a first TDD transmission frame 501-503 by control signaling on the DS control channel 515 of the DS section 571 of the first TDD transmission frame 501-503 and/or a second TDD transmission frame 501-503 adjacent to the first TDD transmission frame 501-503. This facilitates fast implementation of the partition 580-583, e.g., from TDD transmission frame to TDD transmission frame.

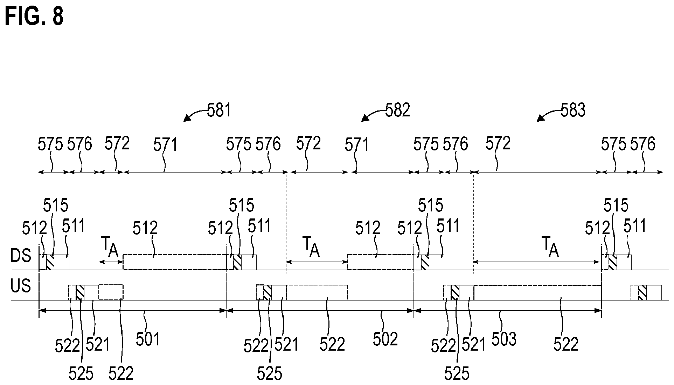

In the example of FIG. 7, the position of the US control channel 525 varies from TDD transmission frame 501-503 to TDD transmission frame 501-503. This is because the duration of the preceding DS section 571 is adjusted according to dynamic US/DS allocation. In general, such a change of the position of the control channels 515, 525 may lead to connectivity problems. For example, if the particular partition 580-583 is not synchronized between the transmitter and the receiver - e.g., due to corrupted control signaling -, the connection between the transmitter and the receiver may be required to be reset (link drop). This can be time-consuming. To increase robustness of implementing different partitions 580-583 over the course of time according to dynamic US/DS allocation, it can be desirable to include a DS control channel 515 and/or an US control channel 525 at fixed, predefined positions of the various TDD transmission frames 501-503, i.e., irrespective of the particular selected partition 580-583. Respective concepts are illustrated with respect to FIG. 8.

FIG. 8 illustrates aspects with respect to a partition 580 of multiple transmission frames 501-503. FIG. 8 also illustrates aspects with respect to DO. FIG. 8 also illustrates aspects with respect to dynamic US/DS allocation. For example, the methods according to FIGs. 5 and 6 could be employed to implement the partition 580 according to FIG. 8. According to the example of FIG. 8, the overall frame configuration of the TDD transmission frames 501-503 is maintained.

The example of FIG. 8 generally corresponds to the example of FIG. 7. However, in the example of FIG. 8, the partition 581-583 of each TDD transmission frame 501-503 also includes a predefined DS section 575 and a predefined US section 576, in addition to the DS section 571 and the US section 572 subject to the optimization according to Eqs. 6 or 9. Therefore, the duration of the DS section 575 and the US section 576 is fixed; the DS section 575 and the US section 576 form a fixed part of the TDD transmission frames 501-503 which does not change for changing partitions 581-583.

In the example of FIG. 8, the DS section 575 and the US section 576 are arranged at the beginning of the respective TDD transmission frame 501-503, i.e., before the DS section 571 and the US section 572 subject to dynamic US/DS allocation. Thereby, a DS control channel 515 included in the DS section 575, as well as an US control channel 525 included in the US section 576 are arranged at predefined and fixed positions for the various TDD transmission frames 501-503. If synchronization of the partition 581-583 between the transmitter and receiver should be lost - e.g., due to frequent reconfigurations according to dynamic US/DS allocation -, synchronization can be reestablished by control signaling on the DS control channel 515 in the DS section 575 and/or on the US control channel 525 in the US section 576. In other words, the fixed time position of the control channels 515, 525 of the sections 575, 576 within a TDD transmission frame 501-503 may provide robust operation of the lines 112-114, because implementation of the partition 581-583 with respect to the sections 571, 572 may be achieved using control signaling on the control channels 515, 525 of the sections 575, 576.

The robust control signaling facilitates short latencies for re-configuring the partition 581-583: it is generally possible to control the CPE modems 102-104 of the plurality of lines 112-114 to implement the partition 581-583 for a first transmission frame 501-503 by control signaling on the DS control channel 515 of the static DS section 575 of the same, first TDD transmission frame 501-503 and/or a second TDD transmission frame 501-503 adjacent to the first TDD transmission frame 501-503. For example, in the scenario of FIG. 8, the partition 582 of the TDD transmission frame 502 could be set by control signaling on the control channel 515 of the static DS section 575 of the TDD transmission frame 502 and/or set by control signaling on the control channel 515 of the static DS section 575 of the TDD transmission frame 501. Lengthy protection mechanisms such as acknowledgements or downcounts are not required.

In the various examples described herein, implementation of a partition 580-583 can be done using control signaling which is indicative of DO parameters according to reference implementations, e.g., DOI size, TA size, where TA is a number of quiet symbols that follow NOI. In case RMC symbol of the DS control channel 515 in the DS section 575 of the transmission frame 501 is erased, the same information can be resent in an RMC symbol of the DS control channel 515 of the DS section 575 of the next TDD transmission frame 502 and successfully received on the other side - even though synchronization of the partition 580 may then be lost.

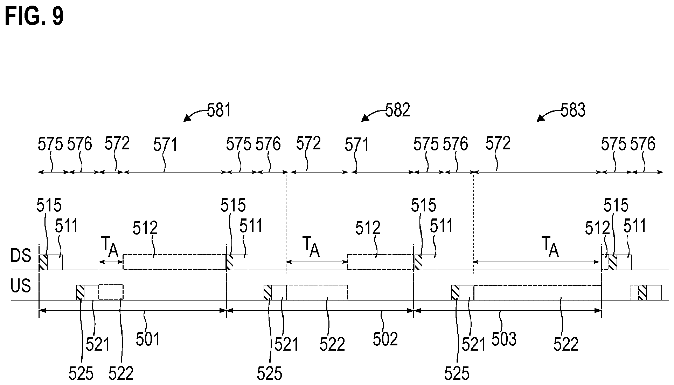

In the example of FIG. 8, the DS section 575 and the US section 576 - i.e., the static part of the TDD transmission frames 501-503 - include NOIs 511, 521 and DOIs 512, 522. While in the example of FIG. 8, both, the DS section 575, as well as the US section 576 also include DOIs 512, 522, in other examples, it would be possible that the DS section 575 in the US section 576 do not include DOIs, but rather only NOIs 511, 521. This facilitates more efficient transmission of data, upstream in particular, as in FIG.9.

In the example of FIG. 8, the DS section 571 and the US section 572 implement a shared time based on the parameter TA: TA excludes a certain part of the time from the transmission time budget of a particular transmission direction, i.e., from US or from DS. In the example of FIG. 8, the shared time is fully assigned as DOI 512, 522, because within DOI quiet times 595 can be used which enables flexible sharing of US and DS capacity. In other examples, the dynamic part of the TDD transmission frames 501-503 may also include NOIs 511, 521.

FIG. 9 illustrates aspects with respect to a partition 580 of multiple transmission frames 501-503. FIG. 9 also illustrates aspects with respect to DO. FIG. 9 also illustrates aspects with respect to dynamic US/DS allocation. For example, the methods according to FIGs. 5 and 6 could be employed to implement the partition 580 according to FIG. 9.

The example of FIG. 9 generally corresponds to the example of FIG. 8. However, in the example of FIG. 9, the DS section 576 does not include a NOI 512; likewise, the US section 576 does not include in NOI 522. Hence, the static part of the TDD transmission frames 501-503 does not include NOIs 512, 522.

FIG. 9 thus, in other words, illustrates a partition that allows to divide the TDD transmission frames 501-503 into two parts: a static part, that includes the DS section 575 and the US section 576 of fixed duration. In the static part, the DS and US sections 575, 576 do not overlap, because no quiet symbols are allowed in any NOI 512, 522. The second part is the dynamic part that includes the DS section 571 and the US section 572. The DS section 571 includes the DS DOI 512 and the US section 572 includes the US DOI 522. In the dynamic part, the DS and US transmission intervals can be said to overlap and separation of them in time is achieved by setting appropriate value of parameter TA of the DS DOI ($TA_D$). Because of this, the dynamic part of the TDD transmission frames 501-503 could also be denoted shared part.

As such, in the example of FIG. 9, the partitions 581-583 are determined by re-allocating the quiet times of the DO between the US sections 572 and the DS sections 571. Hence, the quiet times within the DOIs 512 of the DS are used for transmission in US, and vice versa. Furthermore, in the example of FIG. 9, the frame configuration of the TDD transmission frames 501-503 is kept fixed, i.e., not affected by said determining of the partitions 581-583. For example, the parameters Mds and Mus may remain fixed.

Three examples of partitions 581-583 of the dynamic part shown in FIG. 8: with high DS (small TA) for TDD transmission frame 501, with high US (large TA) for TDD transmission frame 502, and with very high US ($TA_D = DOI_D$) for TDD transmission frame 503. Similarly, a setting with very high DS could be achieved by setting $TA_D = 0$ and DOIu = 0 (not shown in FIG. 8).

The example of logical frame setting in FIG. 9 provides, not counting RMC symbols, minimum US capabilities equal to NOIu symbol periods, and maximum US capabilities equal to ($M_F - 3 - NOI_D$) symbol periods, where 3 corresponds to 2 RMC symbol periods and 1-symbol gap. Since the minimum distance between US and DS RMC symbols may be at least 5 symbol periods, the minimum value of $NOI_D$ is 3 symbols. With this, the maximum US capability is 36-6 = 30 symbols and US/DS ration is around 30/3.

The maximum DS capacity for the example in FIG. 9 is reached when minimum number of US NOIu symbols is applied. The maximum number of DS symbols is ($MF - 4 - NOI_U$), where 4 corresponds to 2 RMC symbol periods, the last symbols position in the US part of the logical frame, and 1-symbol gap. With the minimum number of US NOI symbols NOIu = 3, the maximum DS capability is 36-7 = 29 symbols, and US/DS ratio is about 3/29.

The parameters to set the partition 581-583 may include the size of NOI 511, 522 for the US section 576 and the DS section 575, respectively: these parameters may mainly determine the minimum range of US/DS ratio and DS/US ratio, respectively.

The parameters to set the partition 580 may include $\underline{DRMC}_{us} = DRMC_{ds} = 1$.

The parameters to set the partition 581-583 may include TA for US section 572 and DS section 571: these parameters determine the sharing between US and DS.

The parameters to set the partition 581-583 may include TBUDGET for US section 572 and DS section 571: these parameters limit the maximum US and DS capacity, respectively.

All the mentioned parameters may be updated every TDD transmission frame 501-503 by appropriate control signalling which provides fast dynamic adjustments of US/DS ratio. For example of FIG. 9, the sharing between US and DS may be controlled from the DPU 101, sometimes referred to as the FTU-O side, which is more convenient from management perspective.

Considering the case of multiple lines: here, the durations of the DS/US sections 571, 572 can be set considering the required minimum US and DS capacity. The durations of the section 571, 572 may also define the minimum DS/US and the minimum US/DS ratios, respectively. The TBUDGET values for US and DS may determine the maximum boundary of US/DS and DS/US ratios, respectively. To avoid NEXT, for any given TDD transmission frame 501-503, the same $TA_D$ value shall be set for all lines in the vectored group. This one parameter may control in full the US/DS time sharing and may be modified every TDD transmission frame 501-503.

The optimization may be different and is assumed to be vendor discretionary, however, the goal of this mechanism is, for given values of $NOI_D$ and NOIu to determine the optimum value of $TA_D$ for each TDD transmission frame 501-503.

In a multi-line communication system 100, lines 112-114 may join or leave the vectored group. The joining procedure may require multiple training stages to allow joining of new lines 112-114 without disturbing active lines.

In some examples, dynamic US/DS allocation does not occur in response to receiving a line joining request for a joining line of the plurality of lines 112-114. In particular, a dynamic change of the ratio between the duration of the DS section 571 and the DS section 572 during the training phase may be avoided, because user data may not be transmitted. A minimum number of US symbols may be required to guarantee that the line joining is performed in a sufficiently short time.

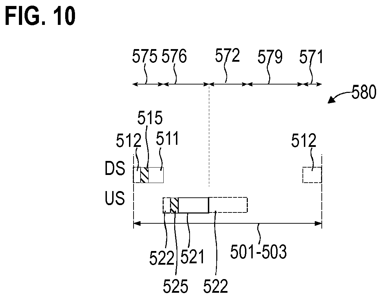

FIG. 10 illustrates aspects with respect to a partition 580 of multiple transmission frames 501-503. FIG. 10 also illustrates aspects with respect to DO. FIG. 8 also illustrates aspects with respect to dynamic US/DS allocation. For example, the methods according to FIGs. 5 and 6 could be employed to implement the partition 580 according to FIG. 10.

FIG. 10 illustrates an example partition 580 that could be selected in response to a line joining request. The line joining request may trigger training. During training, a high amount of data is typically transmitted in US direction to convey channel estimation information that is transmitted from the CPE modems 102-104 to the DPU modem 101 for precoder training. To accommodate for the US data, the NOI of the US section 576 of the static part of the TDD transmission frames 501-503 is prolonged if compared to the scenario of FIG. 8. Thereby, the minimum US transmit time on all lines 112-114 in the binder is extended temporarily during the line joining to support reliable channel measurements and a short training time for the joining line. Generally, it is possible to select the duration of the US section 576 from a plurality of predefined candidate durations in response to the line joining request.

Summarizing, above, techniques have been disclosed which enable to reduce the power consumption in a multi-line communication system employing TDD transmission frames and which further enable dynamic adjustment of the ratio between the duration of an US section of the TDD transmission frames and the duration of a DS section of the TDD transmission frames.

Various examples rely on a partition the TDD transmission frames into a DS section and an US section. Here, it is possible that quiet times are defined with respect to the DS section and/or with respect to the US section. The partition into the DS section and the US section may be determined based on monitoring the data communication on the plurality of lines of the cable binder. In particular, the partition into the DS section of the US section may be determined based on a data rate observed for the data communication.

According to some examples, it is possible that the partition further includes a predefined further DS section and/or a predefined further US section which are not subject to changes based on said monitoring of the data communication. The respective static part of the TDD transmission frames may not change from partition to partition. Thereby, a minimum DS section and the minimum US section can be guaranteed by such a static part of the TDD transmission frame.

In some examples, the partition can be determined using a joint optimization across the plurality of lines of the cable binder. Sometimes, the optimization may not be solvable because of a collision between different constraints. Such a scenario may in particular apply for high-load conditions/collision cases of the communication system where, e.g., a first line requires a long duration for the DS section while a second line requires a long duration for the US section. In such a scenario, it is possible to relax constraints defined by the data rate requirements according to a penalty function. For example, the penalty function may be defined based on a predefined ratio between the duration of the DS section and the US section. The penalty function may be implemented based on slack variables.

In some examples, an US control channel and/or a DS control channel is implemented at a predetermined position within each TDD transmission frame. Hence, the position of the US control channel and/or the DS control channel may not depend on the particular partition. Thereby, the loss of a control message for implementing a new partition of the TDD transmission frame may not necessarily result in a link drop. Thereby, protection mechanisms such as acknowledgment or downcount are not required such that implementation and execution of a newly determine partition can be completed faster.

Further, in response to a line joining request from a joining line of the plurality of lines of the cable binder, it is possible to activate a certain predefined partition of the TDD transmission frame in order to account for specific requirements of the communication system during training.

Summarizing, according to various examples opportunities for transmission upstream and downstream in the same symbol slot of an otherwise statically configured TDD transmission frame are provided. This is achieved by redistributing quiet times of DOI between US sections and DS sections. Thereby, a reconfiguration of the US section does not necessarily result in a reconfiguration of the DS section: if a symbol slot released by the DO from DS transmission is not used for US transmission, it adds power saving, rather than to increase in the US data rate.

For example, various techniques have been described in the framework of ITU-T G.fast, similar techniques may be readily applied to other kinds and types of transmission protocols.

While above various examples have been described relating to inter-line crosstalk of lines arranged in a common cable binder, other geometries are conceivable that could cause significant inter-line crosstalk.

**Claims**

1. A method, comprising:

   - monitoring data communication on a plurality of lines (112-114) to establish data rates of the data communication on the plurality of lines (112-114),
   - based on the data rates: determining a partition (580-583) of at least one time division duplex transmission frame (501-503) of the data communication, the partition (580-583) comprising an upstream section (572) and a downstream section (571) and enabling discontinuous operation of the data communication comprising quiet times, said determining of the partition (580-583) further being based on an overall energy consumption of the data communication on the plurality of lines (112-114),
   - controlling modems (101-104) of the plurality of lines (112-114) to implement the partition (580-583) for the at least one transmission frame (501-503), and
   - performing a joint optimization across the plurality of lines (112-114) to determine the partition (580-583), the joint optimization comprising an objective function determined based on the overall energy consumption, the joint optimization being performed in view of a constraint determined based on the data rates,

      wherein the overall energy consumption is based on a sum of a power consumption of the plurality of lines (112-114),
      wherein the constraint includes that a sum of the number of data symbol positions in upstream, $m_{us}$, and the number of data symbol positions in downstream, $m_{ds}$, is smaller than the size of the time division duplex transmission frame, $M_F$, expressed in symbols.

2. The method of claim 1, further comprising:

   - if the data rate of at least one line of the plurality of lines (112-114) is below a threshold: selectively determining, for the at least one line, a quiet time (595) of the discontinuous operation within at least one of the upstream section (572) and the downstream section (571) of the partition (580-583).

3. The method of claims 1 or 2,
   wherein the partition (580-583) further comprises a predefined further downstream section (575) different from the downstream section (571) and optionally further comprises a predefined further upstream section different (576) from the upstream section (572).

4. The method of claim 3,

   wherein the further downstream section (575) comprises a control channel (515, 525),
   wherein said controlling of the modems (101-104) to implement the partition (580-583) comprises control signaling on the control channel (515, 525).

5. The method of claim 4, further comprising:

- controlling the modems (101-104) of the plurality of lines (112-114) to implement the partition (580-583) for a first transmission frame (501-503) of the at least one transmission frame (501-503) by control signaling on the control channel (515, 525) of the further downstream section (575) of at least one of the first transmission frame (501-503) and a second transmission frame (501-503) adjacent to the first transmission frame (501-503).

6. The method of claims 4 or 5,
   wherein each one of a plurality of transmission frames (501-503) of the data communication comprises the control channel (515, 525) of the further downstream section (575) at a respective predefined position.

7. The method of any one of claims 3-6, further comprising:

   - selecting the duration of the further upstream section (576) from a plurality of predefined candidate durations in response to a line joining request from a joining line of the plurality of lines (112-114).

8. The method of any one of the preceding claims,
   wherein said controlling of the modems (101-104) to implement the partition (580-583) comprises unidirectional control signaling on a control channel (515, 525).

9. The method of any one of the preceding claims,
   wherein the partition (580-583) is determined by re-allocating a quiet time of the discontinuous operation between the upstream section (572) and the downstream section (571) and optionally keeping a frame configuration of the time division duplex transmission frame (501-503) fixed.

10. A device (101-104), comprising circuitry configured to perform the following:

    - monitoring data communication on a plurality of lines (112-114) to establish data rates of the data communication on the plurality of lines (112-114),
    - based on the data rates: determining a partition (580-583) of at least one time division duplex transmission frame (501-503) of the data communication, the partition (580-583) comprising an upstream section (572) and a downstream section (571) and enabling discontinuous operation of the data communication comprising quiet times, said determining of the partition (580-583) further being based on an overall energy consumption of the data communication on the plurality of lines (112-114),
    - controlling modems (101-104) of the plurality of lines (112-114) to implement the partition (580-583) for the at least one transmission frame (501-503),
    - performing a joint optimization across the plurality of lines (112-114) to determine the partition (580-583), the joint optimization comprising an objective function determined based on the overall energy consumption, the joint optimization being performed in view of a constraint determined based on the data rates,

      wherein the overall energy consumption is based on a sum of a power consumption of the plurality of lines (112-114),
      wherein the constraint includes that a sum of the number of data symbol positions in upstream, $m_{us}$, and the number of data symbol positions in downstream , $m_{ds}$, is smaller than the size of the time division duplex transmission frame, $M_F$, expressed in symbols.

11. The device (101-104) of claim 10,
    wherein the circuity is configured to selectively determine, for the at least one line, a quiet time (595) of the discontinuous operation within at least one of the upstream section (572) and the downstream section (571) of the partition (580-583) if the data rate of at least one line of the plurality of lines (112-114) is below a threshold.

12. The device (101-104) of claims 10 or 11,
    wherein the device is configured to perform the method of any one of claims 3 - 9.

**Patentansprüche**

1. Ein Verfahren, umfassend:

   - Überwachen der Datenkommunikation auf einer Mehrzahl von Leitungen (112-114), um Datenraten der Datenkommunikation auf der Mehrzahl von Leitungen (112-114) festzulegen,

- basierend auf den Datenraten: Bestimmen einer Partition (580-583) zumindest eines Zeitduplex-Übertragungsrahmens (501-503) der Datenkommunikation, wobei die Partition (580-583) einen Upstream-Abschnitt (572) und einen Downstream-Abschnitt (571) umfasst und einen diskontinuierlichen Betrieb der Datenkommunikation, umfassend Ruhezeiten, ermöglicht, wobei das Bestimmen der Partition (580-583) ferner auf einem Gesamtenergieverbrauch der Datenkommunikation auf der Mehrzahl von Leitungen (112-114) basiert,

- Steuern von Modems (101-104) der Mehrzahl von Leitungen (112-114), um die Partition (580-583) für den zumindest einen Übertragungsrahmen (501-503) zu implementieren, und

- Ausführen einer gemeinsamen Optimierung über die Mehrzahl von Leitungen (112-114), um die Partition (580-583) zu bestimmen, wobei die gemeinsame Optimierung eine Zielfunktion umfasst, die basierend auf dem Gesamtenergieverbrauch bestimmt wird, wobei die gemeinsame Optimierung im Hinblick auf eine Beschränkung ausgeführt wird, die basierend auf den Datenraten bestimmt wird,

wobei der Gesamtenergieverbrauch auf einer Summe eines Leistungsverbrauchs der Mehrzahl von Leitungen (112-114) basiert,

wobei die Beschränkung umfasst, dass eine Summe der Anzahl von Datensymbolpositionen im Upstream, $m_{us}$, und der Anzahl von Datensymbolpositionen im Downstream, $m_{ds}$, kleiner ist als die Größe des Zeitduplex-Übertragungsrahmens, $M_F$, ausgedrückt in Symbolen.

2. Das Verfahren gemäß Anspruch 1, ferner umfassend:

- wenn die Datenrate zumindest einer Leitung der Mehrzahl von Leitungen (112-114) unter einer Schwelle liegt: selektives Bestimmen, für die zumindest eine Leitung, einer Ruhezeit (595) des diskontinuierlichen Betriebs innerhalb von zumindest einem von dem Upstream-Abschnitt (572) und dem Downstream-Abschnitt (571) der Partition (580-583).

3. Das Verfahren gemäß Anspruch 1 oder 2, wobei die Partition (580-583) ferner einen vordefinierten weiteren Downstream-Abschnitt (575) umfasst, der sich von dem Downstream-Abschnitt (571) unterscheidet, und optional ferner einen vordefinierten weiteren Upstream-Abschnitt (576) umfasst, der sich von dem Upstream-Abschnitt (572) unterscheidet.

4. Das Verfahren gemäß Anspruch 3,

wobei der weitere Downstream-Abschnitt (575) einen Steuerkanal (515, 525) umfasst, wobei das Steuern der Modems (101-104) zur Implementierung der Partition (580-583) eine Steuersignalisierung auf dem Steuerkanal (515, 525) umfasst.

5. Das Verfahren gemäß Anspruch 4, ferner umfassend:

- Steuern der Modems (101-104) der Mehrzahl von Leitungen (112-114), um die Partition (580-583) für einen ersten Übertragungsrahmen (501-503) des zumindst einen Übertragungsrahmens (501-503) durch Steuersignalisierung auf dem Steuerkanal (515, 525) des weiteren Downstream-Abschnitts (575) von zumindest einem von dem ersten Übertragungsrahmen (501-503) und einem zweiten Übertragungsrahmen (501-503), der benachbart zu dem ersten Übertragungsrahmen (501-503) ist, zu implementieren.

6. Das Verfahren gemäß Anspruch 4 oder 5, wobei jeder einer Mehrzahl von Übertragungsrahmen (501-503) der Datenkommunikation den Steuerkanal (515, 525) des weiteren Downstream-Abschnitts (575) an einer jeweiligen vordefinierten Position umfasst.

7. Das Verfahren gemäß einem der Ansprüche 3-6, ferner umfassend:

- Auswählen der Dauer des weiteren Upstream-Abschnitts (576) aus einer Mehrzahl von vordefinierten Kandidatendauern ansprechend auf eine Leitungsverbindungsanfrage von einer Verbindungsleitung der Mehrzahl von Leitungen (112-114).

8. Das Verfahren gemäß einem der vorangehenden Ansprüche, wobei das Steuern der Modems (101-104) zur Implementierung der Partition (580-583) eine unidirektionale Steuersignalisierung auf einem Steuerkanal (515, 525) umfasst.

**9.** Das Verfahren gemäß einem der vorangehenden Ansprüche,
wobei die Partition (580-583) bestimmt wird, indem eine Ruhezeit des diskontinuierlichen Betriebs zwischen dem Upstream-Abschnitt (572) und dem Downstream-Abschnitt (571) neu zugewiesen wird und optional eine Rahmenkonfiguration des Zeitduplex-Übertragungsrahmens (501-503) festgelegt gehalten wird.

**10.** Eine Vorrichtung (101-104), umfassend eine Schaltungsanordnung, die ausgebildet ist, Folgendes auszuführen:

- Überwachen der Datenkommunikation auf einer Mehrzahl von Leitungen (112-114), um Datenraten der Datenkommunikation auf der Mehrzahl von Leitungen (112-114) festzulegen,
- basierend auf den Datenraten: Bestimmen einer Partition (580-583) zumindest eines Zeitduplex-Übertragungsrahmens (501-503) der Datenkommunikation, wobei die Partition (580-583) einen Upstream-Abschnitt (572) und einen Downstream-Abschnitt (571) umfasst und einen diskontinuierlichen Betrieb der Datenkommunikation, umfassend Ruhezeiten, ermöglicht, wobei das Bestimmen der Partition (580-583) ferner auf einem Gesamtenergieverbrauch der Datenkommunikation auf der Mehrzahl von Leitungen (112-114) basiert,
- Steuern von Modems (101-104) der Mehrzahl von Leitungen (112-114), um die Partition (580-583) für den zumindest einen Übertragungsrahmen (501-503) zu implementieren,
- Ausführen einer gemeinsamen Optimierung über die Mehrzahl von Leitungen (112-114), um die Partition (580-583) zu bestimmen, wobei die gemeinsame Optimierung eine Zielfunktion umfasst, die basierend auf dem Gesamtenergieverbrauch bestimmt wird, wobei die gemeinsame Optimierung im Hinblick auf eine Beschränkung ausgeführt wird, die basierend auf den Datenraten bestimmt wird,

wobei der Gesamtenergieverbrauch auf einer Summe eines Leistungsverbrauchs der Mehrzahl von Leitungen (112-114) basiert,
wobei die Beschränkung umfasst, dass eine Summe der Anzahl von Datensymbolpositionen im Upstream, $m_{us}$, und der Anzahl von Datensymbolpositionen im Downstream, $m_{ds}$, kleiner ist als die Größe des Zeitduplex-Übertragungsrahmens, $M_F$, ausgedrückt in Symbolen.

**11.** Die Vorrichtung (101-104) gemäß Anspruch 10,
wobei die Schaltungsanordnung ausgebildet ist, für die zumindest eine Leitung selektiv eine Ruhezeit (595) des diskontinuierlichen Betriebs innerhalb von zumindest einem von dem Upstream-Abschnitt (572) und dem Downstream-Abschnitt (571) der Partition (580-583) zu bestimmen, wenn die Datenrate zumindest einer Leitung der Mehrzahl von Leitungen (112-114) unter einer Schwelle liegt.

**12.** Die Vorrichtung (101-104) gemäß Anspruch 10 oder 11,
wobei die Vorrichtung ausgebildet ist zum Ausführen des Verfahrens gemäß einem der Ansprüche 3-9.


**Revendications**

**1.** Un procédé comprenant le fait de :

- surveiller la communication de données sur une pluralité de lignes (112-114) afin d'établir des débits de données de la communication de données sur la pluralité de lignes (112-114),
- sur la base des débits de données : déterminer une partition (580-583) d'au moins une trame de transmission en duplexage à répartition temporelle (501-503) de la communication de données, la partition (580-583) comprenant une section en amont (572) et une section en aval (571) et permettant un fonctionnement discontinu de la communication de données comprenant des temps de repos, ladite détermination de la partition (580-583) étant en outre basée sur une consommation d'énergie globale de la communication de données sur la pluralité de lignes (112-114),
- commander des modems (101-104) de la pluralité de lignes (112-114) afin d'implémenter la partition (580-583) pour l'au moins une trame de transmission (501-503), et
- effectuer une optimisation conjointe sur la pluralité de lignes (112-114) afin de déterminer la partition (580-583), l'optimisation conjointe comprenant une fonction objectif déterminée sur la base de la consommation d'énergie globale, l'optimisation conjointe étant effectuée en vue d'une contrainte déterminée sur la base des débits de données,

la consommation d'énergie globale étant basée sur une somme d'une consommation de puissance de la pluralité de lignes (112-114),

la contrainte comprenant le fait qu'une somme du nombre de positions de symbole de données en amont, $m_{us}$, et du nombre de positions de symbole de données en aval, $m_{ds}$, est inférieure à la taille de la trame de transmission en duplexage à répartition temporelle, $M_F$, exprimée en symboles.

2. Procédé selon la revendication 1, comprenant en outre le fait de :

- si le débit de données d'au moins une ligne de la pluralité de lignes (112-114) est inférieur à un seuil : déterminer sélectivement, pour l'au moins une ligne, un temps de repos (595) du fonctionnement discontinu dans au moins l'une de la section en amont (572) et de la section en aval (571) de la partition (580-583).

3. Procédé selon l'une des revendications 1 ou 2,
la partition (580-583) comprenant en outre une autre section en aval (575) prédéfinie différente de la section en aval (571) et facultativement comprenant en outre une autre section en amont (576) prédéfinie différente de la section en amont (572).

4. Procédé selon la revendication 3,

l'autre section en aval (575) comprenant un canal de commande (515, 525),
ladite commande des modems (101-104) pour implémenter la partition (580-583) comprenant une signalisation de commande sur le canal de commande (515, 525).

5. Procédé selon la revendication 4, comprenant en outre le fait de :

- commander les modems (101-104) de la pluralité de lignes (112-114) afin d'implémenter la partition (580-583) pour une première trame de transmission (501-503) de l'au moins une trame de transmission (501-503) par une signalisation de commande sur le canal de commande (515, 525) de l'autre section en aval (575) d'au moins l'une de la première trame de transmission (501-503) et d'une deuxième trame de transmission (501-503) adjacente à la première trame de transmission (501-503).

6. Procédé selon l'une des revendications 4 ou 5,
chacune d'une pluralité de trames de transmission (501-503) de la communication de données comprenant le canal de commande (515, 525) de l'autre section en aval (575) à une position prédéfinie respective.

7. Procédé selon l'une des revendications 3-6, comprenant en outre le fait de :

- sélectionner la durée de l'autre section en amont (576) parmi une pluralité de durées candidates prédéfinies en réponse à une demande de jonction de ligne d'une ligne de jonction de la pluralité de lignes (112-114).

8. Procédé selon l'une des revendications précédentes,
ladite commande des modems (101-104) pour implémenter la partition (580-583) comprenant une signalisation de commande unidirectionnelle sur un canal de commande (515, 525).

9. Procédé selon l'une des revendications précédentes,
la partition (580-583) étant déterminée en réallouant un temps de repos du fonctionnement discontinu entre la section en amont (572) et la section en aval (571) et en facultativement maintenant fixe une configuration de trame de la trame de transmission en duplexage à répartition temporelle (501-503).

10. Un dispositif (101-104), comprenant une circuiterie configurée pour effectuer ce qui suit :

- surveiller la communication de données sur une pluralité de lignes (112-114) afin d'établir des débits de données de la communication de données sur la pluralité de lignes (112-114),
- sur la base des débits de données : déterminer une partition (580-583) d'au moins une trame de transmission en duplexage à répartition temporelle (501-503) de la communication de données, la partition (580-583) comprenant une section en amont (572) et une section en aval (571) et permettant un fonctionnement discontinu de la communication de données comprenant des temps de repos, ladite détermination de la partition (580-583) étant en outre basée sur une consommation d'énergie globale de la communication de données sur la pluralité de lignes (112-114),
- commander des modems (101-104) de la pluralité de lignes (112-114) afin d'implémenter la partition (580-583) pour l'au moins une trame de transmission (501-503),
- effectuer une optimisation conjointe sur la pluralité de lignes (112-114) afin de déterminer la partition (580-583), l'optimisation conjointe comprenant une fonction objectif déterminée sur la base de la consommation d'énergie globale, l'optimisation conjointe étant effectuée en vue d'une contrainte déterminée sur la base des débits de données,

la consommation d'énergie globale étant basée sur une somme d'une consommation de puissance de la pluralité de lignes (112-114),
la contrainte comprenant le fait qu'une somme du nombre de positions de symbole de données en amont, $m_{us}$, et du nombre de positions de symbole de données en aval, $m_{ds}$, est inférieure à la taille de la trame de transmission en duplexage à répartition temporelle, $M_F$, exprimée en symboles.

11. Dispositif (101- 104) selon la revendication 10,
la circuiterie étant configurée pour déterminer sélectivement, pour l'au moins une ligne, un temps de repos (595) du fonctionnement discontinu dans au moins l'une de la section en amont (572) et de la section en aval (571) de la partition (580-583) si le débit de données d'au moins une ligne de la pluralité de lignes (112-114) est inférieur à un seuil.

12. Dispositif (101- 104) selon l'une des revendications 10 ou 11,
le dispositif étant configuré pour effectuer le procédé selon l'une des revendications 3-9.

**FIG. 1**

# FIG. 2

# FIG. 3

102-104

CPE

MEM —172

CTRL —171

112-114

RX/TX —173

EP 3 343 826 B1

## FIG. 4

23

## FIG. 5

5001

monitor data communication on a plurality of lines
to establish data rates

5002

depending on the data rates: determine partition of
at least one TDD transmission frame

5003

control modems to implement partition

**FIG. 6**

5011

```
receive DS control signaling
```

5012

```
implement partition of TDD transmission frame
```

FIG. 7

FIG. 8

## FIG. 9

## FIG. 10

**EP 3 343 826 B1**

**Patent documents cited in the description**

- WO 2014018072 A1
- US 20130272177 A1